# EUROPEAN PATENT APPLICATION

(11) **EP 4 589 696 A1**
(43) Date of publication of application: **23.07.2025**
(21) Application number: 24221118.3
(22) Date of filing: 18.12.2024
(51) Int. Cl.: H01M 4/75, H01M 50/107, H01M 50/152, H01M 50/627

(54) **SECONDARY BATTERY AND METHOD OF MANUFACTURING SECONDARY BATTERY**

(30) Priority: 18.01.2024 KR 20240008017; 16.04.2024 KR 20240050581
(71) Applicant: SK On Co., Ltd., Seoul 03161 (KR)
(72) Inventor: LEE, Jae Myoung, 34124 Daejeon (KR)
(74) Representative: Bird & Bird LLP

(57) **Abstract**

A secondary battery is disclosed. In some implementations, the secondary battery includes an electrode assembly including a positive electrode, a negative electrode, and a separator, a can accommodating the electrode assembly, a first current collector electrically connected to the electrode assembly, the first current collector including a current collecting column protruding upwardly and an injection hole vertically passing through the current collecting column, a first electrode terminal electrically connected to the first current collector, the first electrode terminal having a first coupling hole into which the current collecting column is inserted, the first electrode terminal coupled to the can, and a cap portion configured to seal the injection hole.

## Description

### TECHNICAL FIELD

The technology and implementations disclosed in this patent document generally relate to a secondary battery and a method of manufacturing the secondary battery.

### BACKGROUND

A secondary battery may be a type of energy storage means that may be charged and discharged. Secondary batteries have been widely used in a variety of means using electricity as a power source. For example, secondary batteries have been used as an energy storage means in applications ranging from a variety of means, from small-sized devices such as mobile phones, laptops, tablets, and the like to large-sized devices such as vehicles, aircraft, and the like. In particular, recently, secondary batteries have been actively researched for use as vehicle power sources.

Secondary batteries may be classified as lead-acid batteries, nickel-cadmium batteries, nickel-hydrogen batteries, lithium-ion batteries, and the like, depending on a material of an electrode or the like. A type of secondary battery may be appropriately selected depending on a design capacity, a usage environment, or the like. Alternatively, a secondary battery may be an all-solid-state battery using a solid electrolyte instead of a liquid electrolyte. Lithium-ion batteries may have relatively high voltages and levels of capacitance, as compared to other types of secondary batteries. Accordingly, lithium-ion batteries have been widely used in devices within fields requiring high-density energy storage means such as vehicle battery packs and the like.

Secondary batteries, such as lithium-ion batteries, may include a positive electrode, a negative electrode, a separator, an electrolyte, and the like, as main components. The positive electrode and the negative electrode may be disposed with the separator formed of an insulating material interposed therebetween, and may be charged or discharged by the movement of ions through the electrolyte.

Secondary batteries may be manufactured as flexible pouch-type battery cells or rigid prismatic or cylindrical can-type battery cells.

### SUMMARY

According to an aspect of the present disclosure, a process of a secondary battery may be improved.

According to an aspect of the present disclosure, energy density of a secondary battery may be improved.

According to an aspect of the present disclosure, a hole in a bottom portion of a secondary battery may not be formed.

According to an aspect of the present disclosure, internal resistance of a positive electrode current collector and a positive electrode terminal portion of a secondary battery may be reduced.

A secondary battery and a method of manufacturing the secondary battery of the present disclosure may be widely applied in the field of green technology, such as to electric vehicles, battery charging stations, or the like. In addition, the secondary battery and the method of manufacturing the secondary battery of the present disclosure may be used in eco-friendly electric vehicles, hybrid vehicles, or the like, to prevent climate change by suppressing air pollution and greenhouse gas emissions.

According to an aspect of the present disclosure, there is provided a secondary battery including an electrode assembly including a positive electrode, a negative electrode, and a separator, a can accommodating the electrode assembly, a first current collector electrically connected to the electrode assembly, the first current collector including a current collecting column protruding upwardly and an injection hole vertically passing through the current collecting column, a first electrode terminal electrically connected to the first current collector, the first electrode terminal having a first coupling hole into which the current collecting column is inserted, the first electrode terminal coupled to the can, and a cap portion configured to seal the injection hole.

The first current collector may be disposed on an upper portion of the electrode assembly and include a disk-shaped current collecting plate providing the current collecting column.

The current collecting plate may be electrically connected to a first electrode foil of the electrode assembly.

The first electrode terminal may include a terminal column, forming the first coupling hole inside the terminal column.

The first electrode terminal may further include an external terminal provided on an upper portion of the terminal column, the external terminal extending in a horizontal direction, and an internal terminal provided on a lower portion of the terminal column, the internal terminal extending in the horizontal direction.

The current collecting column may be in contact with the inside of the terminal column to be electrically connected to the inside of the terminal column.

The can may include a body portion with at least one of an upper portion and a lower portion open, and may include a first sealing portion sealing an upper portion of the body portion, and a second sealing portion sealing a lower portion of the body portion.

At least one of the first sealing portion and the second sealing portion may be formed integrally with the body portion.

The first electrode terminal may be coupled to the can through the first sealing portion.

The second sealing portion may be electrically connected to a second electrode foil of the electrode assembly.

The first sealing portion may have a second coupling hole into which the current collecting column and the first electrode terminal are inserted.

The secondary battery may further include a gasket, sealing a space between the first electrode terminal and the first sealing portion.

The cap portion may have a rivet shape inserted into and coupled to the injection hole in a fitting manner.

The cap portion may include a rivet column inserted into the injection hole, and a rivet head provided on an upper portion of the rivet column, the rivet head extending in a horizontal direction.

An upper portion of the first coupling hole may have a shape corresponding to that of the rivet head to be coupled to the rivet head.

The cap portion may have a disk shape covering an upper portion of the injection hole.

The current collecting column may include a protruding head at one end of an upper portion, extending in a horizontal direction. The cap portion may be in contact with the protruding head.

According to another aspect of the present disclosure, there is provided a method of manufacturing a secondary battery, the method including a second electrode welding operation of electrically connecting a second electrode foil and a second sealing portion of an electrode assembly to each other, the electrode assembly including a positive electrode, a negative electrode, and a separator, an electrode assembly insertion operation of inserting the electrode assembly into a body portion of a can, a first electrode welding operation of electrically connecting a first electrode foil and a first current collector of the electrode assembly to each other, a current collecting column insertion operation of inserting a current collecting column of the first current collector into a first electrode terminal to electrically connect the current collecting column to the first electrode terminal, an injection operation of injecting an electrolyte into an injection hole vertically passing through the current collecting column, and a sealing operation of sealing the injection hole with a cap portion.

The method may include a lower portion welding operation of welding the second sealing portion and the body portion to each other.

The method may include an upper portion welding operation of welding a first sealing portion into which the first electrode terminal is inserted to the body portion.

According to an embodiment of the present disclosure, a process of a secondary battery may be improved.

According to an embodiment of the present disclosure, energy density of a secondary battery may be improved.

According to an embodiment of the present disclosure, a hole in a bottom portion of a secondary battery may not be formed.

According to an embodiment of the present disclosure, internal resistance of a positive electrode current collector and a positive electrode terminal portion of a secondary battery may be reduced.

### BRIEF DESCRIPTION OF DRAWINGS

Certain aspects, features, and advantages of the disclosed technology are illustrated by the following detailed description with reference to the accompanying drawings.
FIG. 1 is an exploded perspective view of a secondary battery according to the present disclosure.
FIG. 2 is a cross-sectional view of a secondary battery according to an embodiment.
FIG. 3 is a cross-sectional view of a secondary battery according to an embodiment.
FIG. 4 is a cross-sectional view of a secondary battery according to an embodiment.
FIG. 5 is an exploded cross-sectional view of a secondary battery according to an embodiment.
FIG. 6 is a cross-sectional view of a secondary battery according to another embodiment.
FIG. 7 is a flowchart illustrating a method of manufacturing a secondary battery according to the present disclosure.
FIG. 8 is a flowchart illustrating a method of manufacturing a secondary battery according to the present disclosure.
FIG. 9 is a flowchart illustrating a method of manufacturing a secondary battery according to the present disclosure.
FIG. 10 is a flowchart illustrating a method of manufacturing a secondary battery according to the present disclosure.
FIG. 11 is a flowchart illustrating a method of manufacturing a secondary battery according to the present disclosure.

### DETAILED DESCRIPTION

Features of the present disclosure disclosed in this patent document are described by embodiments with reference to the accompanying drawings.

The present disclosure can be implemented in some embodiments to provide a secondary battery and a method of manufacturing the secondary battery.

Hereinafter, embodiments of the present disclosure will be described with reference to the accompanying drawings. For convenience, in the following description, detailed descriptions will be omitted for configurations that obscure the technical gist of the present disclosure or for known configurations.

The following embodiments are provided to more completely describe the present disclosure to those skilled in the art. The following embodiments are provided to aid in an understanding of the present disclosure, and the technical concept of the present disclosure is not necessarily limited to particular embodiments described below.

The terms used herein are provided to more completely describe specific embodiments from the above-described point of view. Accordingly, the terms used herein should not be construed to reduce, limit, or restrict the technical idea of the present disclosure.

As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, operations, operations, elements, components or a combination thereof, but do not preclude the presence or addition of one or more other features, integers, operations, operations, elements, components, and/or groups thereof.

A secondary battery or a battery cell, described herein, may include a battery that may be charged and discharged. For example, the secondary battery may include a lead acid battery, a nickel cadmium battery, a nickel hydride battery, a lithium-ion battery, or the like. In this description, it is mainly assumed that the secondary battery is a lithium-ion battery. However, it should be understood that a technical concept described herein are applicable to other suitable types of batteries other than a lithium-ion battery.

The words and terminologies used in the specification and claims should not be construed with common or dictionary meanings. Accordingly, embodiments described in the specification and the configurations illustrated in the drawings are not more than the most preferred embodiments of the present disclosure.

Hereinafter, preferred embodiments of the present disclosure will be described in detail with reference to the accompanying drawings. In this case, it should be noted that the same components are denoted by the same reference numerals in the accompanying drawings. In addition, detailed descriptions of well-known functions and configurations that may obscure the gist of the present disclosure will be omitted. In addition, some components are exaggerated, omitted, or schematically illustrated in the accompanying drawings, and the size of each component does not fully reflect the actual size. In addition, as used herein, terms such as "upper side," "upper portion," "upper surface," "lower side," "lower portion," "lower surface," and "side surface" are based on the drawings, may vary depending on a direction in which an element or component is actually arranged.

Hereinafter, a secondary battery and a method of manufacturing the secondary battery according to the present disclosure will be described in detail with reference to the drawings.

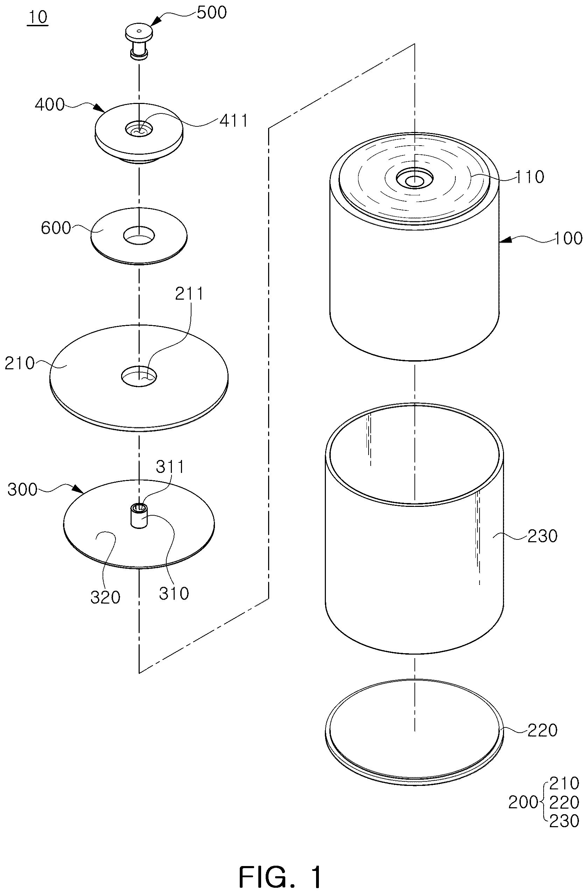

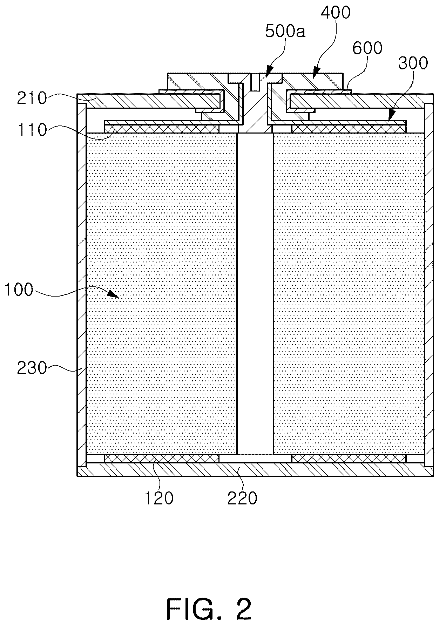

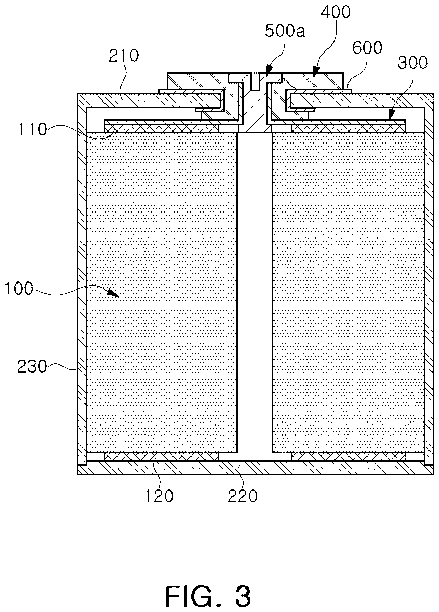

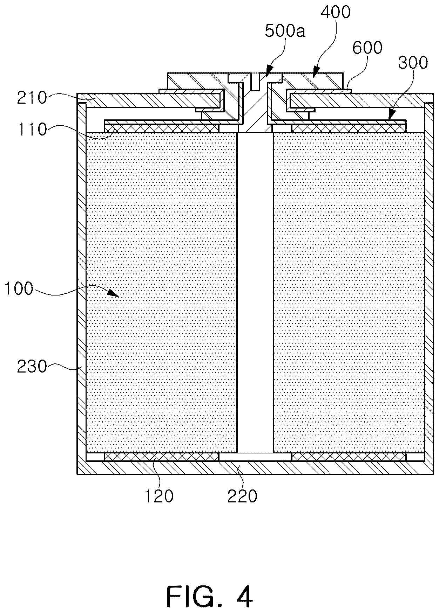

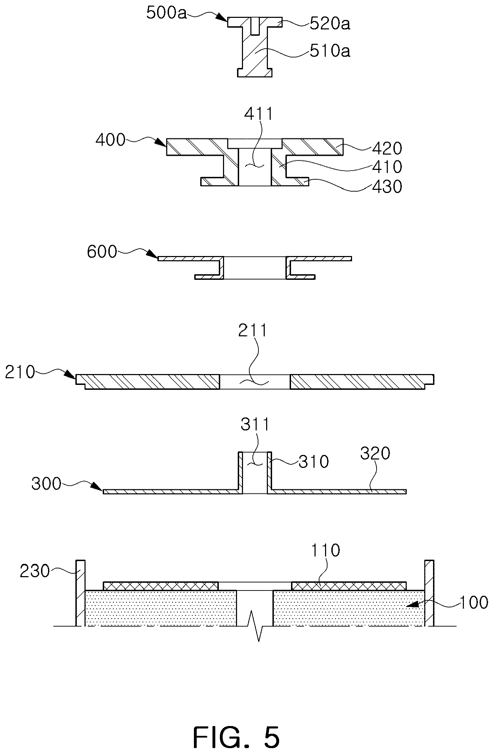

FIG. 1 is an exploded perspective view of a secondary battery 10 according to the present disclosure. FIG. 2 is a cross-sectional view of the secondary battery 10 according to an embodiment. FIG. 3 is a cross-sectional view of the secondary battery 10 according to an embodiment. FIG. 4 is a cross-sectional view of the secondary battery 10 according to an embodiment. FIG. 5 is a cross-sectional view of the secondary battery 10 according to an embodiment.

FIGS. 1 and 2 illustrate a case in which both upper and lower portions of a body portion 230 are open, FIG. 3 illustrates a case in which a lower portion of the body portion 230 is open, and FIG. 4 illustrates a case in which an upper portion of the body portion 230 is open.

Referring to FIGS. 1 to 5, the secondary battery 10 according to the present disclosure may include an electrode assembly 100, a can 200, a first current collector 300, a first electrode terminal 400, and a cap portion 500.

The electrode assembly 100 may include a positive electrode, a negative electrode, and a separator. The separator may include an insulator interposed between the negative electrode and the positive electrode. The electrode assembly 100 may be configured as a stack-type electrode assembly 100 in which a positive electrode, a negative electrode, and a separator are alternately stacked. Alternatively, the electrode assembly 100 may be configured a jelly roll-type electrode assembly 100 in which a positive electrode, a negative electrode, and a separator interposed between the positive electrode and the negative electrode are alternately stacked and wound in the form of a roll. In the present disclosure, the electrode assembly 100 is illustrated as the jelly roll-type electrode assembly 100, but the present disclosure is not limited thereto.

Each of the positive electrode and the negative electrode may have a structure in which a positive electrode active material or a negative electrode active material is coated on a foil. For example, the negative electrode may be formed by coating graphite or the like on a foil formed of copper or nickel, and the positive electrode may be formed by coating a transition metal oxide active material on a foil formed of aluminum.

The first electrode may be a positive electrode, and the second electrode may be a negative electrode. Alternatively, in some cases, the first electrode may be a negative electrode, and the second electrode may be a positive electrode. However, in the present disclosure, the first electrode is described as a positive electrode and the second electrode is described as a negative electrode.

The electrode assembly 100 may include a first electrode foil 110 and a second electrode foil 120. At least a portion of the positive electrode and the negative electrode may not be coated with the active material. A portion of the positive electrode and the negative electrode, not coated with the active material, may be referred to as an uncoated portion. At least a portion of the uncoated portion may be referred to as a first electrode foil 110 and a second electrode foil 120. In this case, the first electrode foil 110 and the second electrode foil 120 may protrude upwardly and downwardly, respectively. Referring to FIG. 2, the first electrode foil 110 may protrude upwardly from the electrode assembly 100, and the second electrode foil 120 may protrude downwardly from the electrode assembly 100.

The can 200 may accommodate the electrode assembly 100. In other words, the can 200 may be referred to as a case. The can 200 may be formed to have an empty space therein to accommodate the electrode assembly 100. The can 200 may have a cylindrical or circular columnar shape. Accordingly, the cylindrical or columnar-shaped can 200 may include an empty space having a cylindrical or circular columnar shape therein, and the electrode assembly 100 may be accommodated in the empty space.

The can 200 may include a body portion 230, a first sealing portion 210, and a second sealing portion 220. The can 200 may include a material having electrical conductivity. For example, the material may be nickel-plated steel, stainless steel, aluminum, or the like.

The body portion 230 may be a structure with at least one of an upper portion and a lower portion open. That is, the body portion 230 may have at least one of an upper surface and a lower surface open. As illustrated in FIG. 2, the body portion 230 may have both open upper and lower portions. Alternatively, as illustrated in FIG. 3, the body portion 230 may have an open lower portion. Alternatively, as illustrated in FIG. 4, the body portion 230 may have an open upper portion. The electrode assembly 100 may be inserted into the can 200 through the open upper surface or lower surface. Whether the electrode assembly 100 is inserted into the upper surface or the lower surface of the body portion 230 may vary depending on an order of a manufacturing method. The body portion 230 may have various shapes. For example, the body portion 230 may have a cylindrical or circular columnar shape.

The first sealing portion 210 may seal an upper portion of the body portion 230. For example, when the upper portion of the body portion 230 is open, the first sealing portion 210 may be coupled to the upper portion of the body portion 230 to seal the open upper portion of the body portion 230. Various methods may be applied to seal the upper portion of the body portion 230. However, in the present disclosure, welding is described as an example. For welding, various welding methods may be applied. For example, a laser welding method may be applied. Surfaces of the first sealing portion 210 and the body portion 230, opposing each other to be coupled to each other, may have shapes corresponding to each other. An edge of the first sealing portion 210 may be welded in a state of being coupled to the body portion 230.

Alternatively, when a lower portion of the body portion 230 is open and an upper portion of the body portion 230 is blocked, the first sealing portion 210 may be a blocked upper portion of the body portion 230. Accordingly, the first sealing portion 210 may be coupled to the body portion 230 in a state of being separated from the body portion 230, or may be formed integrally with the body portion 230.

The first sealing portion 210 may have a second coupling hole 211. The second coupling hole 211 may be a hole into which a current collecting column 310 and a first electrode terminal 400 to be described below are inserted. For example, the first sealing portion 210 may have a disk shape, and the center of the first sealing portion 210 may have a hole vertically passing therethrough, and the hole may be a second coupling hole 211.

The second sealing portion 220 may seal a lower portion of the body portion 230. For example, when the lower portion of the body portion 230 is open, the second sealing portion 220 may be coupled to the lower portion of the body portion 230 to seal the open lower portion of the body portion 230. In the same manner as the upper portion, the lower portion of the body portion 230 may be sealed using various methods, but may be sealed by a welding method. An edge of the second sealing portion 220 may be welded in a state of being coupled to the lower portion of the body portion 230.

Alternatively, when an upper portion of the body portion 230 is open and a lower portion of the body portion 230 is blocked, the second sealing portion 220 may be a blocked lower portion of the body portion 230. Accordingly, the second sealing portion 220 may be coupled to the body portion 230 in a state of being separated from the body portion 230, or may be formed integrally with the body portion 230.

That is, referring to FIG. 2, when upper and lower portions of the body portion 230 are open, the first sealing portion 210 and the second sealing portion 220 may be coupled to the body portion 230 in a separate form. Alternatively, referring to FIGS. 3 and 4, when one of the upper and lower portions of the body portion 230 is open, at least one of the first sealing portion 210 and the second sealing portion 220 may be formed integrally with the body portion 230, and the other one may be coupled to the body portion 230 in a separate form.

The second sealing portion 220 may have a disk shape. In this case, the second sealing portion 220 may not have a hole. In other words, the second sealing portion 220 may be a bottom portion of the secondary battery 10. In a process of manufacturing the secondary battery 10 according to the related art, a hole was formed in the bottom portion of the secondary battery 10, a welding equipment was inserted into the hole, or an electrolyte was injected into the hole and then the hole was re-sealed. However, the second sealing portion 220 of the structure of the secondary battery 10 according to the present disclosure may have a structure in which a hole does not need to be formed.

The second sealing portion 220 may be electrically connected to the second electrode foil 120 of the electrode assembly 100. For example, the second sealing portion 220 may be welded to the second electrode foil 120. The second sealing portion 220 may have electrical conductivity, and thus may be welded to the second electrode foil 120 to be electrically connected to the second electrode foil 120.

Conversely, the first sealing portion 210 may not be electrically connected to the first electrode foil 110. For example, the secondary battery 10 may further include a gasket 600. The gasket 600 may seal a space between the first electrode terminal 400 and the first sealing portion 210, and may include an insulator. The first electrode terminal 400 may be in a state of being electrically connected to the first electrode foil 110. Accordingly, the gasket 600 may prevent the first sealing portion 210 and the first electrode foil 110 from being electrically connected to each other.

The first current collector 300 may be electrically connected to the electrode assembly 100. For example, the first current collector 300 may be electrically connected to the first electrode foil 110 of the electrode assembly 100. In this case, the first current collector 300 and the first electrode foil 110 may be electrically connected to each other using a method such as welding or the like.

The first current collector 300 may include a current collecting plate 320, a current collecting column 310, and an injection hole 311.

The current collecting plate 320 may be a disk-shaped plate disposed on an upper portion of the electrode assembly 100, the disk-shaped plate providing the current collecting column 310. For example, the current collecting plate 320 may have a disk shape having a hole formed in the center thereof. One flat surface of a lower portion of the current collecting plate 320 may be in contact with the upper portion of the electrode assembly 100. Specifically, one surface of the lower portion of the current collecting plate 320 may be in contact with the first electrode foil 110 of the electrode assembly 100. The current collecting plate 320 may be electrically connected to the first electrode foil 110. In this case, the current collecting plate 320 and the first electrode foil 110 may be electrically connected to each other using a welding method or the like.

The current collecting column 310 may protrude upwardly. The current collecting column 310 may have a shape protruding upwardly from a circumference of a hole formed in the center of the current collecting plate 320. The shape of the current collecting column 310 may be formed in various manners. The current collecting column 310 may have a cylindrical or circular columnar shape. However, the above-described shape is only an example, and is not necessarily limited thereto, and may be a square columnar shape or a triangular columnar shape.

In this case, a hole, vertically passing through the current collecting column 310, may be the injection hole 311. That is, the current collecting column 310 may have a hole therein, and the hole may be the injection hole 311. The injection hole 311 may be a hole for injecting an electrolyte.

The first electrode terminal 400 may be electrically connected to the first current collector 300. The first electrode terminal 400 may be formed of a material having electrical conductivity. For example, at least a portion of the first electrode terminal 400 and at least a portion of the first current collector 300 may be in contact with each other to be electrically connected to each other.

Specifically, the first electrode terminal 400 may have a first coupling hole 411 into which the current collecting column 310 is inserted. The first electrode terminal 400 may have a terminal column 410 having a first coupling hole 411 therein. The terminal column 410 may have various shapes. For example, the terminal column 410 may have a cylindrical or circular columnar shape. The terminal column 410 may have an empty space therein, and the empty space may be the first coupling hole 411. In this case, the current collecting column 310 may be in contact with the inside of the terminal column 410 to be electrically connected to the inside of the terminal column 410. The inside of the terminal column 410 may have a shape corresponding to that of the outside of the current collecting column 310 so as to be in close contact with the current collecting column 310.

A surface of the terminal column 410 and a surface of the current collecting column 310 may be in contact with each other to be electrically connected to each other. Accordingly, as a contact area increases, electrical resistance may decrease. In other words, internal resistance of a positive electrode current collector and a positive electrode terminal portion may be reduced. The contact area may be adjusted. For example, a length of each of the terminal column 410 and the current collecting column 310 may be increased, or a diameter of each of the terminal column 410 and the current collecting column 310 may be increased to increase the contact area.

The first electrode terminal 400 may be coupled to the can 200. For example, the first electrode terminal 400 may be coupled to the can 200 through the first sealing portion 210. The first sealing portion 210 may have a second coupling hole 211. The terminal column 410 of the first electrode terminal 400 may be inserted into the second coupling hole 211, and the first electrode terminal 400 and the first sealing portion 210 may be coupled to each other. The current collecting column 310 may be inserted into the terminal column 410. Accordingly, the current collecting column 310 and the terminal column 410 of the first electrode terminal 400 may be inserted into the second coupling hole 211.

The first electrode terminal 400 may include an external terminal 420 and an internal terminal 430. The external terminal 420 may be provided on an upper portion of the terminal column 410, and may extend in a horizontal direction. The internal terminal 430 may be provided on a lower portion of the terminal column 410, and may extend in the horizontal direction. The external terminal 420 and the internal terminal 430 may be respectively fixed to upper and lower surfaces of the first sealing portion 210 with the gasket 600 interposed therebetween. That is, the current collecting column 310, the external terminal 420, and the internal terminal 430 may be fixed with at least one surface of the first sealing portion 210 and the gasket 600 interposed therebetween. In other words, the first electrode terminal 400 may be coupled to the first sealing portion 210 in a fitting manner. In this case, the gasket 600 may be positioned between the first electrode terminal 400 and the first sealing portion 210. The first electrode terminal 400 and the first sealing portion 210 may not be electrically connected to each other by the gasket 600. However, the first electrode terminal 400 and the first sealing portion 210 may be insulated from each other through insulating coating or the like as well as the gasket 600, and thus the gasket 600 may not need to be included.

An upper portion of the external terminal 420 may be exposed to the outside of the can 200. The external terminal 420 may be electrically connected to the first electrode foil 110 and in contact with an external component to transmit electrical energy. The internal terminal 430 may be electrically connected to the first current collector 300. For example, referring to FIG. 2, a lower surface of the internal terminal 430 may be in contact with the current collecting plate 320 of the first current collector 300. Accordingly, as an area of the internal terminal 430 increases, electrical resistance may decrease.

The cap portion 500 may be configured to seal the injection hole 311. In a state in which the first current collector 300, the first electrode terminal 400, and the first sealing portion 210 are coupled to an upper portion of the can 200, the injection hole 311 may be in an open state. An electrolyte may be injected into a case through the injection hole 311. After the electrolyte is injected, the injection hole 311 may be sealed by the cap portion 500.

Various methods of sealing, by the cap portion 500, the injection hole 311 may be applied. For example, the cap portion 500 may have a rivet shape and a disk shape.

Referring to FIGS. 2 to 5, the cap portion 500 may have a shape of a rivet inserted into and coupled to the injection hole 311 in a fitting manner. In other words, the cap portion 500 may be a rivet-shaped cap portion 500a. The rivet- shaped cap portion 500a may be inserted into the injection hole 311 by applying physical force to seal the injection hole 311.

The rivet- shaped cap portion 500a may include a rivet column 510a inserted into the injection hole 311. The rivet column 510a may have various shapes. For example, the rivet column 510a may have a cylindrical shape or a circular columnar shape. The rivet column 510a may be inserted into the injection hole 311 to be in contact with an internal surface of the current collecting column 310. In this case, in order to seal the injection hole 311, an external surface of the rivet column 510a and the internal surface of the current collecting column 310 may have shapes corresponding to each other to be engaged with each other.

The rivet-shaped cap portion 500a may include a rivet head 520a provided on an upper portion of the rivet column 510a, the rivet head 520a extending in the horizontal direction. In this case, an upper portion of the first coupling hole 411 may have a shape corresponding to that of the rivet head 520a to be coupled to the rivet head 520a. That is, the upper portion of the first coupling hole 411 may form a wide space in the horizontal direction to be coupled to the rivet head 520a.

For additional sealing force between the rivet-shaped cap portion 500a and the injection hole 311, a peripheral portion of the rivet head 520a may be welded to the first electrode terminal 400. For example, an empty space that may be formed between the peripheral portion of the rivet head 520a and the external terminal 420 may be filled using welding. Alternatively, the gasket 600 may be additionally disposed on a lower portion of the rivet head 520a to provide additional sealing force. When the gasket 600 is additionally disposed on the lower portion of the rivet head 520a, the rivet-shaped cap portion 500a may be more stably coupled in a fitting manner, and thus a process of welding the peripheral portion of the rivet head 520a may be omitted.

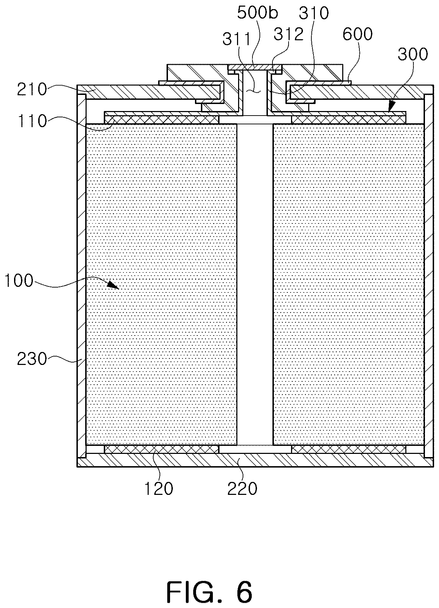

FIG. 6 is a cross-sectional view of a secondary battery 10 according to another embodiment.

FIG. 6 illustrates a secondary battery 10 to which a disk-shaped cap portion 500b is applied.

The cap portion 500 may have a disk shape covering an upper portion of an injection hole 311. In other words, the cap portion 500 may be a disk-shaped cap portion 500b. However, the disk-shaped cap portion 500b may not have a hole to seal the injection hole 311.

The disk-shaped cap portion 500b may be welded in a state of covering an upper portion of the injection hole 311. For example, an upper portion of a first coupling hole 411 may have a shape corresponding to that of the disk-shaped cap portion 500b to be engaged with the disk-shaped cap portion 500b. A peripheral portion of the disk-shaped cap portion 500b may be welded in a state of being inserted into the upper portion of the first coupling hole 411. An empty space that may be formed between an edge of the disk-shaped cap portion 500b and an external terminal 420 may be filled using welding.

In this case, a current collecting column 310 may include a protruding head 312 at one end of an upper portion, extending in a horizontal direction. The protruding head 312 may have a shape that is wide in the horizontal direction, and may fill at least a portion of the upper portion of the first coupling hole 411. The disk-shaped cap portion 500b may be in contact with the protruding head 312. For example, the disk-shaped cap portion 500b may be mounted on an upper portion of the protruding head 312.

The secondary battery 10 of the present disclosure having the above-described structure may be easily assembled and welded, thereby improving a process of manufacturing a secondary battery. In addition, a welding equipment may not need to be inserted into the center of a jelly roll-type electrode assembly 100, such that welding may be easily performed, and an empty space of the center of the electrode assembly 100 may be further filled, thereby increasing energy density.

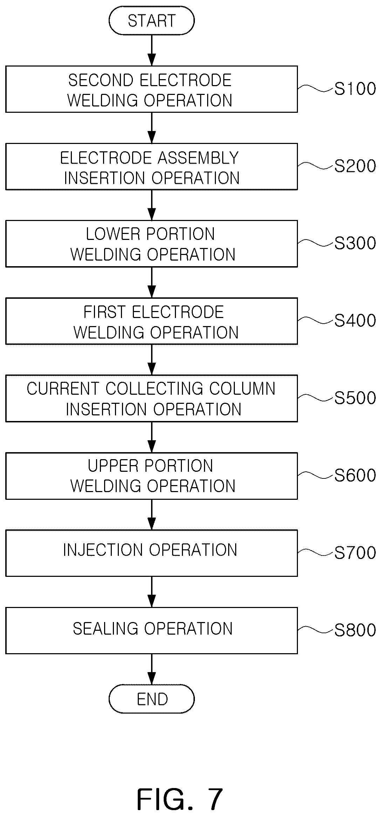

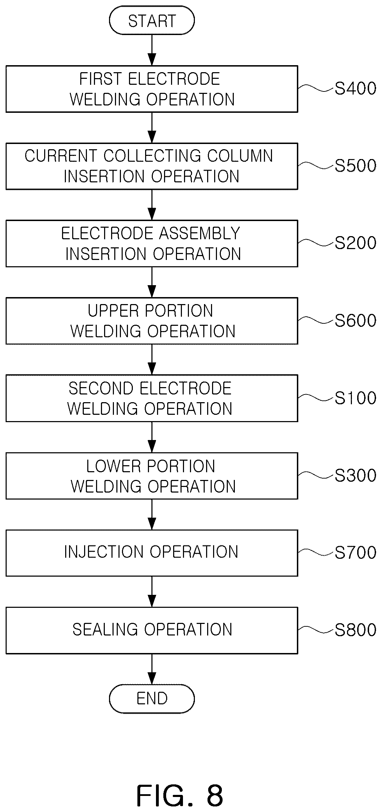

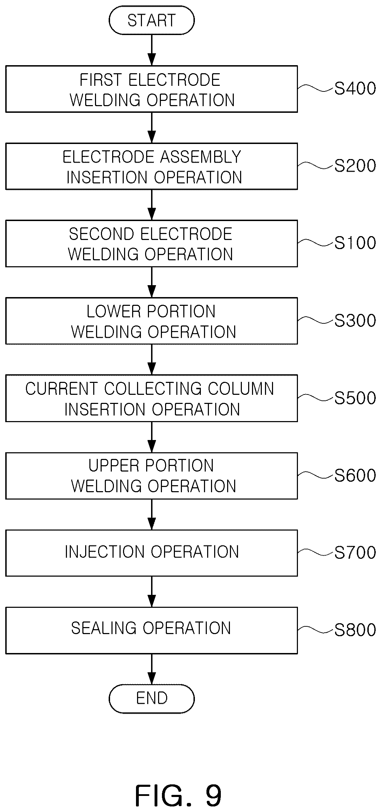

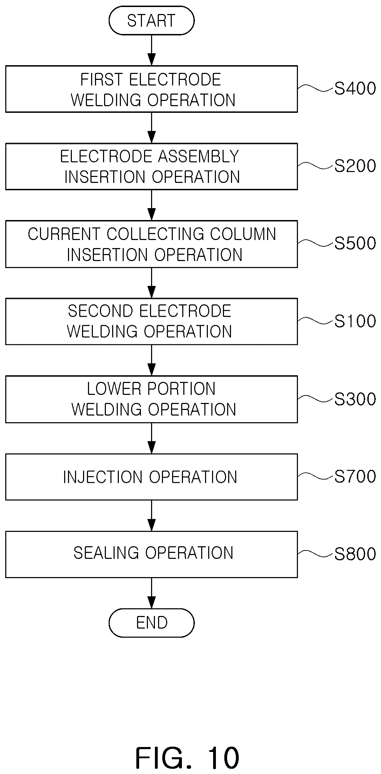

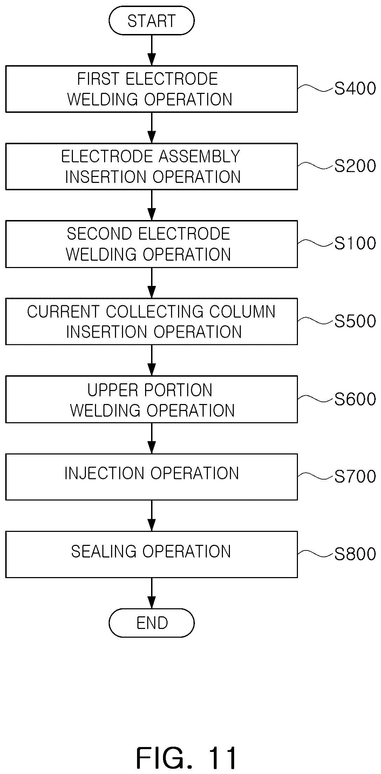

FIG. 7 is a flowchart illustrating a method of manufacturing a secondary battery 10 according to the present disclosure. FIG. 8 is a flowchart illustrating a method of manufacturing the secondary battery 10 according to the present disclosure. FIG. 9 is a flowchart illustrating a method of manufacturing the secondary battery 10 according to the present disclosure. FIG. 10 is a flowchart illustrating a method of manufacturing the secondary battery 10 according to the present disclosure. FIG. 11 is a flowchart illustrating a method of manufacturing the secondary battery 10 according to the present disclosure.

FIGS. 7 to 9 illustrate a case in which both upper and lower portions of a body portion 230 are open, FIG. 10 illustrates a case in which a lower portion of the body portion 230 is open, and FIG. 11 illustrates a case in which an upper portion of the body portion 230 is open.

Referring to FIGS. 7 to 11 together with FIGS. 1 to 6, a method of manufacturing the secondary battery 10 according to the present disclosure may include a second electrode welding operation S100, an electrode assembly insertion operation S200, a lower portion welding operation S300, a first electrode welding operation S400, a current collecting column insertion operation S500, an upper portion welding operation S600, an injection operation S700, and a sealing operation S800.

First, a method of manufacturing a secondary battery when upper and lower portions of the body portion 230 are open will be described with reference to FIGS. 7 to 9. As illustrated in FIGS. 7 to 9, the method of manufacturing the secondary battery 10 may be performed in various orders. First, respective operations will be described with reference to FIG. 7, and then the orders of FIGS. 8 and 9 will be described.

The second electrode welding operation S100 may be an operation of electrically connecting a second electrode foil 120 and a second sealing portion 220 of an electrode assembly 100, the electrode assembly including a positive electrode, a negative electrode, and a separator, to each other. Various electrical connection methods may be applied. For example, the second electrode foil 120 and the second sealing portion 220 may be welded to each other to be electrically connected to each other. Welding may be performed in a state in which one surface of an external side of the second electrode foil 120 and one surface of the second sealing portion 220 are in contact with each other.

The electrode assembly insertion operation S200 may be an operation of inserting the electrode assembly 100 into a body portion 230 of a can 200. An upper surface or a lower surface of the body portion 230 of the can 200 may be in an open state. A direction in which the electrode assembly 100 is inserted into the body portion 230 may be changed depending on an order. For example, in a state in which the second electrode foil 120 and the second sealing portion 220 are welded to each other, the electrode assembly 100 may be inserted through an open lower portion of the body portion 230.

The lower portion welding operation S300 may be an operation of welding the second sealing portion 220 and the body portion 230 to each other. The second sealing portion 220 may be in a state of being coupled to the body portion 230. A circumference of the second sealing portion 220 may be coupled to the body portion 230 using welding.

The first electrode welding operation S400 may be an operation of electrically connecting a first electrode foil 110 and a first current collector 300 of the electrode assembly 100 to each other. Various electrical connection methods may be applied. For example, the first electrode foil 110 and a first sealing portion 210 may be electrically connected to each other using welding. Welding may be performed in a state in which one surface of a current collecting plate 320 of the first current collector 300 is in contact with one surface of the first electrode foil 110.

The current collecting column insertion operation S500 may be an operation of inserting a current collecting column 310 of the first current collector 300 into a first electrode terminal 400 and electrically connecting the current collecting column 310 of the first current collector 300 to the first electrode terminal 400. The current collecting column 310 may be inserted into a first coupling hole 411 of the first electrode terminal 400. The first coupling hole 411 may be formed in a terminal column 410. The current collecting column 310 may be inserted into the first coupling hole 411 to be in contact with the inside of the terminal column 410. The outside of the current collecting column 310 and the inside of the terminal column 410 may have shapes corresponding to each other so as to be in contact with each other. The current collecting column 310 and the terminal column 410 may be in contact with each other and electrically connected to each other.

The upper portion welding operation S600 may be an operation of welding the first sealing portion 210 into which the first electrode terminal 400 is inserted to the body portion 230. The first electrode terminal 400 may be in a state of being inserted into the first sealing portion 210. Specifically, the terminal column 410 of the first electrode terminal 400 may be in a state of being inserted into and coupled to a second coupling hole 211 of the first sealing portion 210. In this case, the first sealing portion 210 may be coupled to an open upper portion of the body portion 230 in the current collecting column insertion operation S500. A peripheral portion of the first sealing portion 210 coupled to the open upper portion of the body portion 230 may be welded together with the body portion 230 to seal the open upper portion of the body portion 230.

The injection operation S700 may be an operation of injecting an electrolyte into an injection hole 311 vertically passing through the current collecting column 310. The can 200 may be in a sealed state except for the injection hole 311 after the upper portion welding operation S600 and the lower portion welding operation S300. The injection operation S700 may be an operation of injecting an electrolyte into the body portion 230 through the injection hole 311.

The sealing operation S800 may be an operation of sealing the injection hole 311 with a cap portion 500. Various sealing method may be applied. The cap portion 500 may also have various shapes.

For example, the cap portion 500 may have a shape of a rivet inserted into and coupled to the injection hole 311 in a fitting manner, and the sealing operation S800 may be an operation of riveting and sealing the injection hole 311 with the rivet-shaped cap portion 500a. In other words, the rivet-shaped cap portion 500a may be forcibly fitted into the injection hole 311 to seal the injection hole 311.

Alternatively, the sealing operation S800 may be an operation of welding the cap portion 500 to the current collecting column 310 or the first electrode terminal 400. For example, when the cap portion 500 is a disk-shaped cap portion 500b having a disk shape, the cap portion 500 may be welded to the current collecting column 310 or the first electrode terminal 400 to seal the injection hole 311 in a state of covering an upper portion of the injection hole 311. Alternatively, a rivet head 520a of the rivet-shaped cap portion 500a may be welded to the current collecting column 310 or the first electrode terminal 400 to seal the injection hole 311 in a state in which the rivet-shaped cap portion 500a is coupled to the injection hole 311 in a fitting manner.

The method of manufacturing the secondary battery 10 may be changed in various orders, as illustrated in FIGS. 8 and 9. For example, referring to FIG. 8, the method may be performed in an order of the first electrode welding operation S400, the current collecting column insertion operation S500, the electrode assembly insertion operation S200, the upper portion welding operation S600, the second electrode welding operation S100, the lower portion welding operation S300, the injection operation S700, and the sealing operation S800. Accordingly, after the first electrode foil 110 and the first current collector 300 are welded to each other, the current collecting column 310 may be inserted into the first electrode terminal 400. Thereafter, after the first current collector 300, the first electrode terminal 400, and the electrode assembly 100 to which the first sealing portion 210 is coupled may be inserted into the body portion 230, the first sealing portion 210 and the body portion 230 may be welded to each other. After welding of an upper portion of the body portion 230 is completed, the second electrode foil 120 and the second sealing portion 220 may be welded to each other, and a lower portion of the body portion 230 may be welded.

Alternatively, as illustrated in FIG. 9, the method may also be performed in an order of the first electrode welding operation S400, the electrode assembly insertion operation S200, the second electrode welding operation S100, the lower portion welding operation S300, the current collector insertion operation S500, the upper portion welding operation S600, the injection operation S700, and the sealing operation S800.

A method of manufacturing a secondary battery when a lower portion of the body portion 230 is open will be described with reference to FIG. 10. When the lower portion of the body portion 230 is open and an upper portion of the body portion 230 is blocked, the first sealing portion 210 may be in a state of being formed integrally with the body portion 230, and the second sealing portion 220 may be coupled to the body portion 230 in a state of being separated from the body portion 230.

In this case, in the method of manufacturing a secondary battery, an upper portion welding operation S600 may be omitted. Accordingly, a method of manufacturing a secondary battery may include a first electrode welding operation S400), an electrode assembly insertion operation S200, a current collecting column insertion operation S500, a second electrode welding operation S100, a lower portion welding operation S300, an injection operation S700, and a sealing operation S800.

A method of manufacturing the secondary battery when the upper portion of the body portion 230 is opened will be described with reference to FIG. 11. When the upper portion of the body portion 230 is opened and the lower portion of the body portion 230 is blocked, the second sealing portion 220 may be integrally formed with the body portion 230, and the first sealing portion 210 may be coupled to the body portion 230 in a separated state.

In this case, in the method of manufacturing a secondary battery, the lower portion welding operation S300 may be omitted. Accordingly, the method of manufacturing a secondary battery may include the first electrode welding operation S400, the electrode assembly insertion operation S200, the second electrode welding operation S100, the current collecting column insertion operation S500, the upper portion welding operation S600, the injection operation S700, and the sealing operation S800.

That is, when both upper and lower portions of the body portion 230 are in an open state, the upper portion welding operation S600 and the lower portion welding operation S300 may be included. When one of the upper and lower portions of the body portion 230 is in an open state, one of the upper portion welding operation S600 and the lower portion welding operation S300 may be omitted.

FIGS. 7 to 11 sequentially illustrate a method of manufacturing the secondary battery 10 according to the present disclosure, but are not limited thereto. Accordingly, the secondary battery 10 may be manufactured in various orders in addition to the orders described in the present disclosure.

In addition, the cylindrical and circular columnar shapes described in the present disclosure may be appropriately changed, and are not limited to the above-described shapes. The welding method is also not limited thereto, and other coupling methods may be applied within a range that may be appropriately changed.

Only specific examples of implementations of certain embodiments are described. Variations, improvements and enhancements of the disclosed embodiments and other embodiments may be made based on the disclosure of this patent document.

## Claims

1. A secondary battery comprising:
an electrode assembly including a positive electrode, a negative electrode, and a separator;
a can accommodating the electrode assembly;
a first current collector electrically connected to the electrode assembly, the first current collector including a current collecting column protruding upwardly and an injection hole vertically passing through the current collecting column;
a first electrode terminal electrically connected to the first current collector, the first electrode terminal having a first coupling hole into which the current collecting column is inserted, the first electrode terminal coupled to the can; and
a cap portion configured to seal the injection hole.

2. The secondary battery of claim 1, wherein the first current collector is disposed on an upper portion of the electrode assembly and includes a disk-shaped current collecting plate providing the current collecting column.

3. The secondary battery of claims 1 or 2, wherein the first electrode terminal includes a terminal column, forming the first coupling hole inside the terminal column.

4. The secondary battery of claim 3, wherein the first electrode terminal further includes an external terminal provided on an upper portion of the terminal column, the external terminal extending in a horizontal direction, and an internal terminal provided on a lower portion of the terminal column, the internal terminal extending in the horizontal direction.

5. The secondary battery of claim 3, wherein the current collecting column is in contact with the inside of the terminal column to be electrically connected to the inside of the terminal column.

6. The secondary battery of any one of claims 1 to 5, wherein the can includes a body portion with at least one of an upper portion and a lower portion open, and includes a first sealing portion sealing an upper portion of the body portion, and a second sealing portion sealing a lower portion of the body portion.

7. The secondary battery of claim 6, wherein at least one of the first sealing portion and the second sealing portion is formed integrally with the body portion.

8. The secondary battery of claim 6, wherein the first electrode terminal is coupled to the can through the first sealing portion.

9. The secondary battery of any one of claims 1 to 8, wherein the cap portion has a rivet shape inserted into and coupled to the injection hole in a fitting manner.

10. The secondary battery of claim 9, wherein the cap portion includes a rivet column inserted into the injection hole, and a rivet head provided on an upper portion of the rivet column, the rivet head extending in a horizontal direction.

11. The secondary battery of claim 10, wherein an upper portion of the first coupling hole has a shape corresponding to that of the rivet head to be coupled to the rivet head.

12. The secondary battery of any one of claims 1 to 11, wherein the cap portion has a disk shape covering an upper portion of the injection hole.

13. The secondary battery of any one of claims 1 to 12, wherein the current collecting column includes a protruding head at one end of an upper portion, extending in a horizontal direction, and the cap portion is in contact with the protruding head.

14. A method of manufacturing a secondary battery, the method comprising:
a second electrode welding operation of electrically connecting a second electrode foil and a second sealing portion of an electrode assembly to each other, the electrode assembly including a positive electrode, a negative electrode, and a separator;
an electrode assembly insertion operation of inserting the electrode assembly into a body portion of a can;
a first electrode welding operation of electrically connecting a first electrode foil and a first current collector of the electrode assembly to each other;
a current collecting column insertion operation of inserting a current collecting column of the first current collector into a first electrode terminal to electrically connect the current collecting column to the first electrode terminal;
an injection operation of injecting an electrolyte into an injection hole vertically passing through the current collecting column; and
a sealing operation of sealing the injection hole with a cap portion.

15. The method of claim 14, further comprising at least one of:
a lower portion welding operation of welding the second sealing portion and the body portion to each other; and
an upper portion welding operation of welding a first sealing portion into which the first electrode terminal is inserted to the body portion.
